# EUROPEAN PATENT SPECIFICATION

(11) **EP 4 007 127 B1**
(45) Date of publication and mention of the grant of the patent: **06.05.2026**
(21) Application number: 19939313.3
(22) Date of filing: 31.07.2019
(51) Int. Cl.: H02K 3/52, H02K 3/28, H02K 15/095

(54) **ELECTRIC MOTOR, COMPRESSOR, REFRIGERATION CIRCUIT DEVICE, AND MANUFACTURING METHOD FOR ELECTRIC MOTOR**
ELEKTROMOTOR, KOMPRESSOR, KÄLTEKREISLAUFVORRICHTUNG UND HERSTELLUNGSVERFAHREN FÜR EINEN ELEKTROMOTOR
MOTEUR ÉLECTRIQUE, COMPRESSEUR, DISPOSITIF DE CIRCUIT DE RÉFRIGÉRATION, ET PROCÉDÉ DE FABRICATION D'UN MOTEUR ÉLECTRIQUE

(43) Date of publication of application: 01.06.2022
(73) Proprietor: Toshiba Carrier Corporation, Kawasaki-Shi, Kanagawa 212-8585 (JP)
(72) Inventor: TAEMA, Yoshihiro, Fuji-shi, Shizuoka 416-8521 (JP); SUGIMOTO, Yasuharu, Fuji-shi, Shizuoka 416-8521 (JP); SHIBATA, Kazuo, Fuji-shi, Shizuoka 416-8521 (JP)
(74) Representative: Gramm, Lins & Partner Patent- und Rechtsanwälte PartGmbB
(86) International application number: PCT/JP2019/030102
(87) International publication number: WO 2021/019751

(56) References cited:
- EP-A2- 2 611 000
- WO-A1-2014/083947
- WO-A1-2015/045331
- WO-A1-2015/045331
- WO-A1-2019/026227
- FR-A1- 2 830 994
- GB-A- 2 544 523
- JP-A- 2006 180 575
- JP-B2- 4 271 003
- US-A1- 2017 317 547

## Description

### Technical Field

Embodiments described herein relate generally to an electric motor, a compressor, a refrigeration cycle device, and a method of manufacturing an electric motor.

### Background Art

In the past, electric motors with various structures in which windings are wound on the teeth of an iron core of a stator have been known. For example, in an electric motor driven by a three-phase AC power supply, many winding connections are required, which increases the time and cost of manufacturing.

### Citation List

### Patent Literatures

Patent Literature 1: JP 2015-70652 A
Patent Literature 2: JP 2019-62726 A
EP 3 611 000 A2 discloses an electric motor comprising:
   a cylindrical stator and a rotor disposed inside the stator, wherein
   the stator comprises an iron core including a cylindrical yoke and nine teeth protruding inwardly of the yoke, an insulating member provided at an end portion of the iron core in an axial direction, three independent windings respectively wound continuously on three different teeth of the nine teeth, three first crimp terminals provided respectively to the three windings, and three second crimp terminals provided respectively to the three windings,
   each of the three windings includes a first terminal wire, a second terminal wire, a first intermediate wire between two teeth of the nine teeth close to the second terminal wire, and a second intermediate wire between two teeth of the nine teeth close to the first terminal wire.
JP 4 271003 B2 discloses a stator of a motor has a beginning winding terminal of a winding wire attached to one wire constraining groove of a first cavity, one or two lead-side crossing wires or one lead-side crossing wire and a lead wire attached to another wire constraining groove of the first cavity, and the winding wire. The winding terminals are inserted into the first and second cavities to connect the winding terminals with one or two lead-side crossing wires or one lead-side crossing wire and the lead wire, and to connect the winding terminals with the winding terminals at the end of the winding and one or two lead-side crossing wires or one lead-side crossing wire and the lead wire. The connection is made between the winding end terminal and one or two neutral-side crossing wires.

### Summary of Invention

### Technical Problem

Embodiments described herein aim to provide an electric motor, a compressor, a refrigeration cycle device, and a manufacturing method for an electric motor, which can improve the efficiency of the winding connection process.

### Solution to Problem

An electric motor according to an embodiment comprises a cylindrical stator and a rotor disposed inside the stator. The stator comprises an iron core including a cylindrical yoke and nine teeth protruding inwardly of the yoke, an insulating member provided at an end portion of the iron core in an axial direction, three independent windings respectively wound continuously on three different teeth of the nine teeth, three first crimp terminals provided respectively to the three windings, and three second crimp terminals provided respectively to the three windings. Each of the three windings includes a first terminal wire, a second terminal wire, a first intermediate wire between two teeth of the nine teeth close to the second terminal wire, and a second intermediate wire between two teeth of the nine teeth close to the first terminal wire. Each of the three windings is wound in the order of a first tooth, a second tooth and a third tooth. The first terminal wire corresponds to a portion between a terminal and the first tooth at a beginning of winding. The second terminal wire corresponds to a portion between a terminal and the third tooth at an end of winding. The first intermediate wire corresponds to a portion that connects the second tooth and the third tooth. The second intermediate wire corresponds to a portion that connects the first tooth and the second tooth. The first crimp terminals connect the first terminal wire of the corresponding winding to two points of the first intermediate wire of the winding. The second crimp terminals connect the second terminal wire of the corresponding winding to two points of the second intermediate wire of the winding.

A compressor according to an embodiment comprises the electric motor, and a compression mechanism section driven by the electric motor.

A refrigeration cycle device according to an embodiment comprises the compressor, a heat sink connected to the compressor, an expansion device connected to the heat sink, and a heat absorber connected between the expansion device and the compressor.

A manufacturing method of an electric motor according to an embodiment comprises winding the three windings respectively onto the different three teeth of the nine teeth in order, each of the different three teeth including a first tooth, a second tooth and a third tooth; connecting, in each of the three windings, a first terminal wire to two points of a first intermediate wire by a first crimp terminal, the first terminal wire corresponds to a portion between a terminal and the first tooth at a beginning of winding, the first intermediate wire corresponds to a portion that connects the second tooth and the third tooth; and connecting, in each of the three windings, a second terminal wire to two points of a second intermediate wire by a second crimp terminal, the second terminal wire corresponds to a portion between a terminal and the third tooth at an end of winding, the second intermediate wire corresponds to a portion that connects the first tooth and the second tooth.

### Brief Description of Drawings

FIG. 1 shows a schematic cross section of a refrigeration cycle circuit and a compressor of an air conditioner according to a first embodiment.
FIG. 2 is a schematic front view of a stator provided in the compressor.
FIG. 3 is a schematic plan view of the stator viewed in an axial direction.
FIG. 4 is a schematic plan view of a stator iron core provided in the stator viewed in an axial direction.
FIG. 5 is a schematic plan view of a first insulating member provided in the stator viewed in an axial direction.
FIG. 6 is a schematic plan view of a second insulating member provided in the stator viewed in an axial direction.
FIG. 7 is a schematic perspective view of a housing section and a crimp terminal provided in the stator, in a state where they are separated.
FIG. 8 is a schematic perspective view of the housing section and the crimp terminal, in a state where the crimp terminal is inserted in the housing section.
FIG. 9 shows a circuit configured by windings of each phase in the stator.
FIG. 10 shows wiring of windings of each phase with respect to the first insulating member and teeth of the stator iron core.
FIG. 11 shows an example of a neutral wire that can be used in an electric motor according to a second embodiment.
FIG. 12 shows an example of a circuit that can be configured by using the above neutral wire.

### Mode for Carrying Out the Invention

An embodiment of the present invention will be described below with reference to the accompanying drawings. In the present embodiment, an air conditioner is disclosed as an example of a refrigeration cycle device. As an example of a compressor, a sealed compressor provided in the air conditioner is disclosed, and as an example of an electric motor, an electric motor (motor) provided in the sealed compressor is disclosed. However, the configuration disclosed in the present embodiment can be applied to other types of electric motors, compressors, and refrigeration cycle devices.

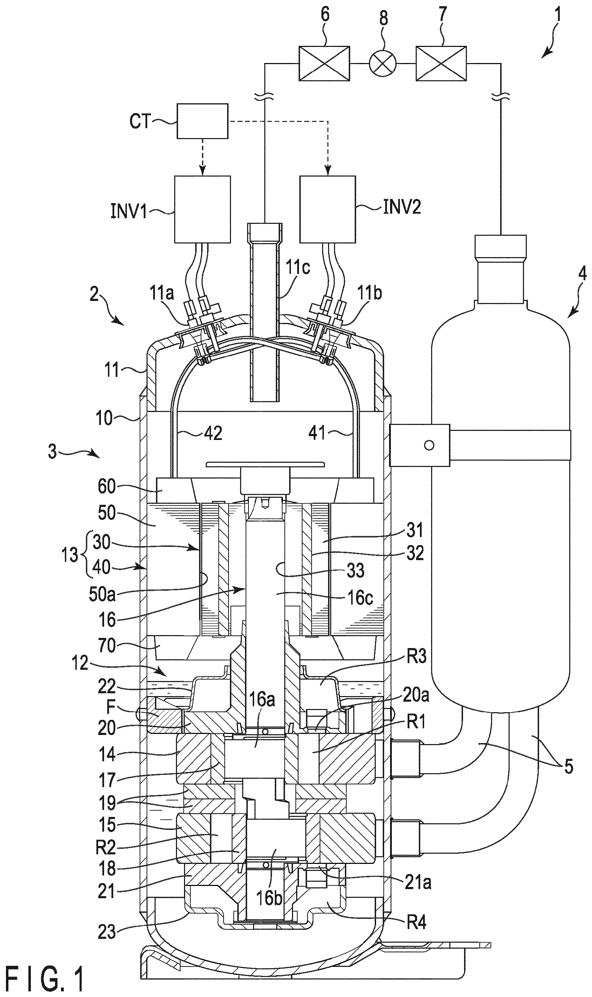

FIG. 1 shows a schematic cross section of a refrigeration cycle circuit of an air conditioner 1 and a sealed compressor 2 (hereinafter referred to as "compressor 2") provided in the air conditioner 1. The compressor 2 comprises a compressor body 3, an accumulator 4, and a pair of suction pipes 5 that connects the compressor body 3 and the accumulator 4.

The air conditioner 1 further comprises a first heat exchanger 6 (heat sink) connected to the compressor body 3, a second heat exchanger 7 (heat absorber) connected to the first heat exchanger 6 and the accumulator 4, and an expansion device 8 provided between these heat exchangers 6 and 7.

A refrigerant supplied to the compressor 2 is separated into gas and liquid in the accumulator 4, and the gas refrigerant is led to the compressor body 3 through each suction pipe 5. The compressor body 3 compresses the gas refrigerant. The compressed highpressure gas refrigerant is condensed in the first heat exchanger 6 to form a liquid refrigerant. This liquid refrigerant is reduced in pressure in the expansion device 8, evaporated in the second heat exchanger 7, and supplied to the accumulator 4 again.

The configuration of the air conditioner 1 is not limited to that shown in the drawing. For example, the air conditioner 1 may further comprise a four-way valve that switches the supply destination of the refrigerant discharged from the compressor 2 between the first heat exchanger 6 and the second heat exchanger 7, and also switches the supply source of the refrigerant to the accumulator 4 between the first heat exchanger 6 and the second heat exchanger 7.

Now, a specific configuration of the compressor 2 will be described. As shown in FIG. 1, the compressor 2 is a so-called vertical rotary compressor, and comprises a case 10, a cover 11, a compression mechanism section 12, and an electric motor 13 (permanent magnet electric motor) as its main elements. The case 10 and cover 11 configures a sealed container.

The case 10 houses the compression mechanism section 12 and the electric motor 13 and has an opening in the upper part. The cover 11 blocks the opening of the case 10. The cover 11 is provided with a first terminal 11a, a second terminal 11b, and a discharge pipe 11c. The discharge pipe 11c is connected to the first heat exchanger 6 via a pipe.

The compression mechanism section 12 is housed in the lower part of the case 10. The compression mechanism section 12 comprises a first cylinder 14, a second cylinder 15, a shaft 16, a first roller 17, and a second roller 18 as its main elements. The first cylinder 14 is fixed to the lower surface of a frame F, which is firmly attached to the case 10. The second cylinder 15 is fixed to the lower surface of the first cylinder 14 via a pair of intermediate partition plates 19.

The compression mechanism section 12 further comprises a first bearing 20 and a second bearing 21. The first bearing 20 is fixed to the upper surface of the first cylinder 14. The space enclosed by the bore of the first cylinder 14, the upper intermediate partition plate 19, and the first bearing 20 configures a first cylinder chamber R1.

The second bearing 21 is fixed to the lower surface of the second cylinder 15. The space enclosed by the bore of the second cylinder 15, the lower intermediate partition plate 19, and the second bearing 21 configures a second cylinder chamber R2.

The first cylinder chamber R1 and the second cylinder chamber R2 are connected to the accumulator 4 via the suction pipe 5, respectively. The gas refrigerant separated in the accumulator 4 is led to the first cylinder chamber R1 and the second cylinder chamber R2 through each suction pipe 5, respectively.

The shaft 16 passes through the first cylinder chamber R1, the second cylinder chamber R2, and each intermediate partition plate 19, and is rotatably supported by the first bearing 20 and the second bearing 21. The shaft 16 includes a first eccentric portion 16a located in the first cylinder chamber R1, a second eccentric portion 16b located in the second cylinder chamber R2, and a connecting portion 16c projecting above the first bearing 20. The first eccentric portion 16a and the second eccentric portion 16b have a phase difference of 180 degrees from each other.

The first roller 17 is fitted on the outer circumferential surface of the first eccentric portion 16a. The second roller 18 is fitted on the outer circumferential surface of the second eccentric portion 16b. When the shaft 16 rotates, the first roller 17 rotates eccentrically in the first cylinder chamber R1, and a part of the outer circumferential surface of the first roller 17 is in slidable linear contact with the inner circumferential surface of the first cylinder chamber R1. Furthermore, when the shaft 16 rotates, the second roller 18 rotates eccentrically in the second cylinder chamber R2, and a part of the outer circumferential surface of the second roller 18 is in slidable linear contact with the inner circumferential surface of the second cylinder chamber R2.

Although not shown in the cross section in FIG. 1, a vane is supported by the first cylinder 14. The distal end portion of the vane is slidably pressed against the outer circumferential surface of the first roller 17. The vane cooperates with the first roller 17 to divide the first cylinder chamber R1 into a suction region and a compression region, and is movable in the direction of protruding into the first cylinder chamber R1 or retreating from the first cylinder chamber R1 in accordance with the eccentric movement of the first roller 17. This changes the volumes of the suction region and the compression region of the first cylinder chamber R1, and the gas refrigerant sucked into the first cylinder chamber R1 from the suction pipe 5 is compressed.

A similar vane is also provided in the second cylinder 15. Therefore, when the second roller 18 moves eccentrically in the second cylinder chamber R2, the volumes of the suction region and the compression region of the second cylinder chamber R2 change, and the gas refrigerant sucked into the second cylinder chamber R2 from the suction pipe 5 is compressed.

The compression mechanism section 12 further comprises a first muffler 22 that surrounds the periphery of the upper surface of the first bearing 20 and a second muffler 23 that surrounds the periphery of the lower surface of the second bearing 21. The space enclosed by the first bearing 20 and the first muffler 22 configures a first muffler chamber R3. The space enclosed by the second bearing 21 and the second muffler 23 configures a second muffler chamber R4.

The first bearing 20 includes a first discharge port 20a. The second bearing 21 includes a second discharge port 21a. The gas refrigerant compressed in the first cylinder chamber R1 is discharged to the first muffler chamber R3 through the first discharge port 20a. The gas refrigerant compressed in the second cylinder chamber R2 is discharged to the second muffler chamber R4 through the second discharge port 21a.

Although not shown in the cross section of FIG. 1, a connecting passage is provided through the first cylinder 14, the second cylinder 15, each intermediate partition plate 19, the first bearing 20 and the second bearing 21. The gas refrigerant discharged to the second muffler chamber R4 is led to the first muffler chamber R3 through this connecting passage. Furthermore, there is a gap between the first muffler 22 and the first bearing 20, through which the gas refrigerant in the first muffler chamber R3 is discharged into the sealed container configured by the case 10 and the cover 11. This gas refrigerant is discharged from the compressor body 3 through the discharge pipe 11c.

The electric motor 13 is located between the compression mechanism section 12 and the discharge pipe 11c. The electric motor 13 comprises a rotor 30 and a stator 40. The stator 40 is fixed to, for example, the inner circumferential surface of the case 10.

The rotor 30 comprises a cylindrical rotor iron core 31 (rotor core) and a permanent magnet 32 embedded inside the rotor iron core 31. The rotor iron core 31 is configured by, for example, a plurality of circular magnetic steel plates stacked on top of each other in the axial direction of the rotor 30. In the center of the rotor iron core 31, an insertion hole 33 is formed through which the connecting portion 16c of the shaft 16 is inserted. The connecting portion 16c of the shaft 16 is coaxially fixed to the rotor 30 by means of, for example, press fitting.

The stator 40 comprises a cylindrical stator iron core 50, a first insulating member 60, and a second insulating member 70. The stator iron core 50 is configured by, for example, a plurality of circular magnetic steel plates stacked on top of each other in the axial direction of the stator 40. In the center of the stator iron core 50, an insertion hole 50a is formed through which the rotor 30 is inserted. The first insulating member 60 is disposed at the upper end of the stator iron core 50 in the axial direction. The second insulating member 70 is disposed at the lower end of the stator iron core 50 in the axial direction.

The stator 40 and the first terminal 11a are connected by a first lead wire assembly 41. The stator 40 and the second terminal 11b are connected by a second lead wire assembly 42. These lead wire assemblies 41 and 42 are a bundle of three lead wires, as described below.

On the outside of the cover 11, a first inverter INV1 is connected to the first terminal 11a. A second inverter INV2 is connected to the second terminal 11b. The first inverter INV1 supplies three-phase (U phase, V phase, W phase) AC waveforms to the stator 40 via the first terminal 11a and the first lead wire assembly 41. The second inverter INV2 supplies three-phase AC waveforms to the stator 40 via the second terminal 11b and the second lead wire assembly 42. These first and second inverters INV1 and INV2 are controlled by a controller CT of the air conditioner 1.

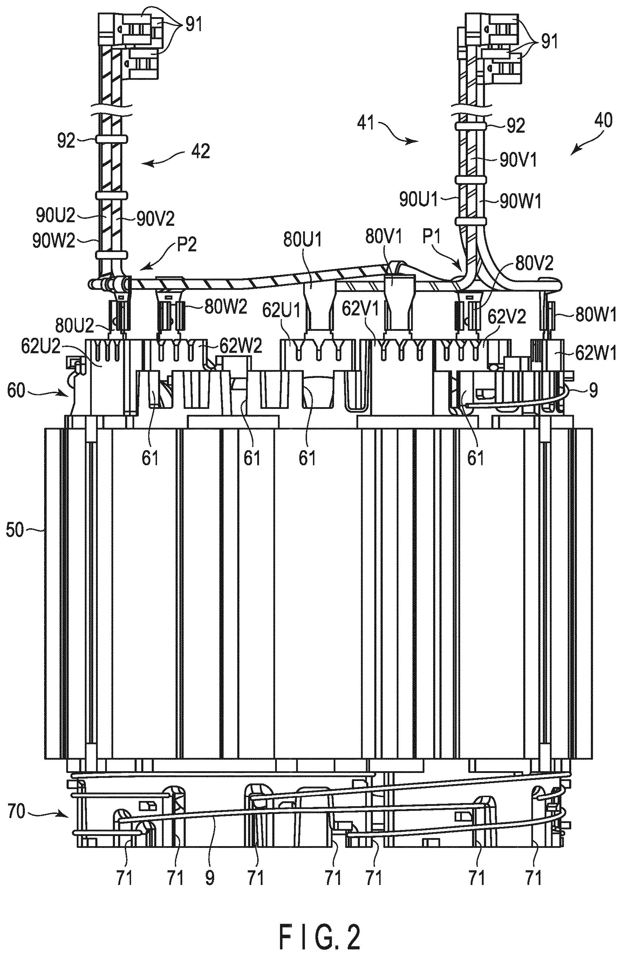

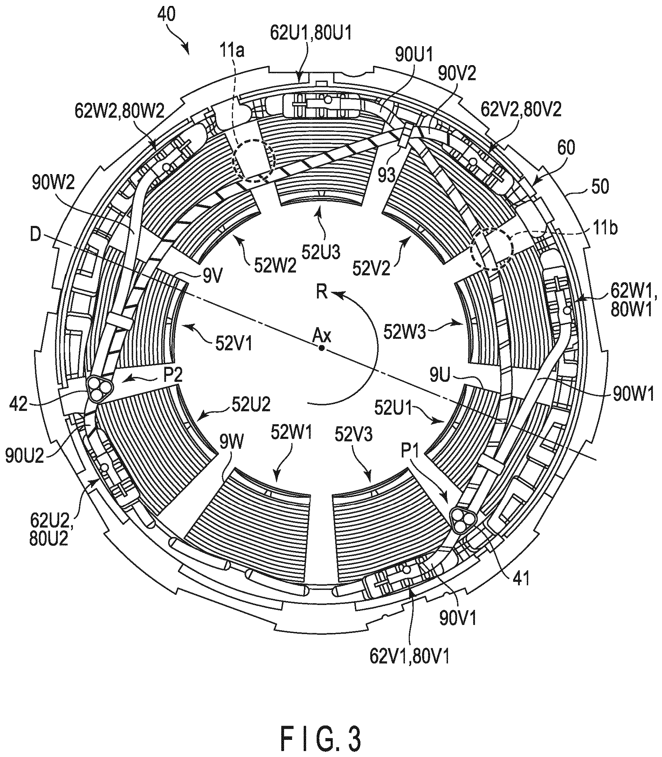

FIG. 2 is a schematic front view of the stator 40. FIG. 3 is a schematic plan view of the stator 40 viewed in the axial direction. As shown in FIG. 2, the first insulating member 60 has a plurality of recesses 61 that are depressed from the upper end toward the stator iron core 50 side. The second insulating member 70 has a plurality of recesses 71 that are recessed from the lower end toward the stator iron core 50 side. Windings 9 are bridged in these recesses 61 and 71. Note that in FIG. 2 and FIG. 3, some of the windings 9 bridged in the recesses 61 of the first insulating member 60 are omitted.

As shown in FIG. 3, the stator 40 has three teeth 52 for each phase (a total of nine). A winding 9 of a corresponding phase is wound on each of the teeth 52, thus forming a coil. Hereinafter, the three teeth 52 corresponding to the U phase are referred to as teeth 52U1 to 52U3, respectively, the three teeth 52 corresponding to the V phase are referred to as teeth 52V1 to 52V3, respectively, and the three teeth 52 corresponding to the W phase are referred to as teeth 52W1 to 52W3, respectively. The windings 9 corresponding to the U, V, and W phases are referred to as windings 9U, 9V, and 9W, respectively.

As shown in FIG. 2 and FIG. 3, the first insulating member 60 has two housing sections 62 (cavities) for each phase. A crimp terminal 80 is inserted into each housing section 62. A lead wire 90 is connected to each crimp terminal 80. At the end portion of the lead wire 90, a terminal 91 is provided for connection to the first terminal 11a or the second terminal 11b of the cover 11 shown in FIG. 1. Hereafter, the two housing sections 62 corresponding to the U phase are referred to as housing sections 62U1 and 62U2, respectively, the two housing sections 62 corresponding to the V phase are referred to as housing sections 62V1 and 62V2, respectively, and the two housing sections 62 corresponding to the W phase are referred to as housing sections 62W1 and 62W2, respectively. The two crimp terminals 80 inserted into the housing sections 62U1 and 62U2 are referred to as crimp terminals 80U1 and 80U2, respectively, the two crimp terminals 80 inserted into the housing sections 62V1 and 62V2 are referred to as crimp terminals 80V1 and 80V2, respectively, and the two crimp terminals 80 inserted into the housing sections 62W1 and 62W2 are referred to as crimp terminals 80V1 and 80V2, respectively. Furthermore, the two lead wires 90 connected to the crimp terminals 80U1 and 80U2 are referred to as lead wires 90U1 and 90U2, the two lead wires 90 connected to the crimp terminals 80V1 and 80V2 are referred to as lead wires 90V1 and 90V2, and the two lead wires 90 connected to the crimp terminals 80W1 and 80W2 are referred to as lead wires 90W1 and 90W2.

As shown in FIG. 3, the teeth 52U1 to 52U3 are disposed every two teeth in a rotational direction R of the rotor 30. Similarly, the teeth 52V1 to 52V3 are disposed every two teeth in the rotational direction R, and the teeth 52W1 to 52W3 are disposed every two teeth in the rotational direction R.

The housing section 62U1 is provided on the outer side of the tooth 52U3 in the radial direction about a rotational axis AX of the rotor 30. The housing section 62U2 is provided on the outer side of the tooth 52U2 in the radial direction. The housing section 62V1 is provided on the outer side of the tooth 52V3 in the radial direction. The housing section 62V2 is provided on the outer side of the tooth 52V2 in the radial direction. The housing section 62W1 is provided on the outer side of the tooth 52W3 in the radial direction. The housing section 62W2 is provided on the outer side of the tooth 52W2 in the radial direction.

As shown in FIG. 2, parts of the lead wires 90U1, 90V1, and 90W1 (first lead wires) on the terminal 91 side are bundled by a plurality of coupling members 92 and configures the first lead wire assembly 41. Similarly, parts of the lead wires 90U2, 90V2, and 90W2 (second lead wires) on the terminal 91 side are bundled by a plurality of coupling members 92 and configures the second lead wire assembly 42.

The lead wires 90U1, 90V1, and 90W1 configuring the first lead wire assembly 41 stand up in the direction of the cover 11 (upward in FIG. 2) at a first bending point P1. The lead wires 90U2, 90V2, and 90W2 configuring the second lead wire assembly 42 stand upward at a second bending point P2.

As shown in FIG. 3, the lead wires 90U1 and 90V2 intersect each other. At this intersection position, the lead wires 90U1 and 90V2 are bundled by the coupling member 93. The other lead wires 90U2, 90V1, 90W1, and 90W2 do not intersect each other.

In the example of FIG. 3, the first bending point P1 is located between the teeth 52U1 and 52V3. The second bending point P2 is located between the teeth 52U2 and 52V1. On the other hand, the first terminal 11a provided on the cover 11 is located between the teeth 52U3 and 52W2, as shown by the dashed circle. The second terminal 11b is located between the teeth 52V2 and 52W3, as shown by the dashed circles.

Here, as shown in FIG. 3, an arbitrary straight line D passing through the rotational axis AX of the rotor 30 is defined. In this case, it is preferable that the first bending point P1 and the second bending point P2 are included in one of the two regions separated by the straight line D, and the first terminal 11a and the second terminal 11b are included in the other region.

When manufacturing the compressor 2, the terminals 91 of each of the lead wire assemblies 41 and 42 are connected to the terminals 11a and 11b of the cover 11, respectively, before the cover 11 is closed against the case 10. To facilitate this process, it is better if each of the lead wire assemblies 41 and 42 is long. However, if each of the bending points P1 and P2 and each of the terminals 11a and 11b are both included in one of the above two regions, it will be difficult to close the cover 11 due to the drag force of each of the lead wire assemblies 41 and 42. Furthermore, after the cover 11 is closed, each of the lead wire assemblies 41 and 42 will flex greatly without being fixed inside the sealed container.

On the other hand, with the configuration shown in FIG. 3, even in the case where each of the lead wire assemblies 41 and 42 is made long, the work is smoother because each of the lead wire assemblies 41 and 42 may be bent naturally based on the bending points P1 and P2, respectively, when closing the cover 11. Furthermore, each of the lead wire assemblies 41 and 42 can be accommodated inside the sealed container with less flexure.

As shown in the example of FIG. 3, if the first bending point P1 and the first terminal 11a are generally located on opposite sides of the rotation axis AX, and the second bending point P2 and the second terminal 11b are generally located on opposite sides of the rotation axis AX, each of the lead wire assemblies 41 and 42 can be accommodated in the sealed container in a longer and less flexible state.

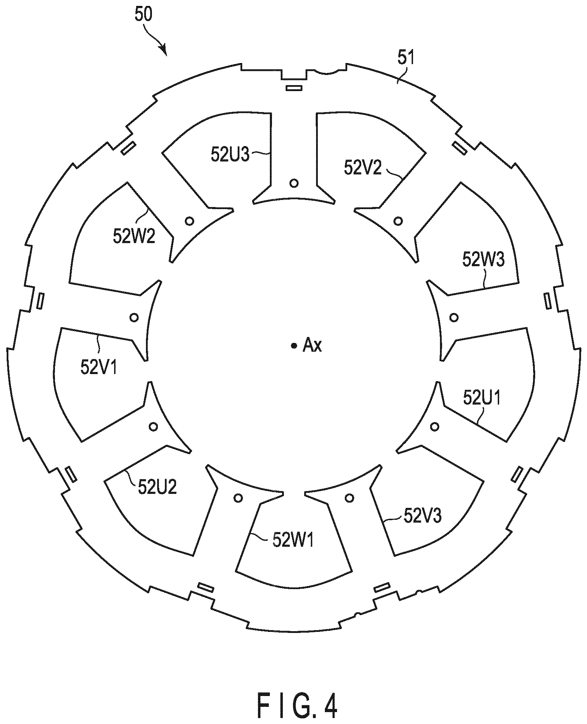

FIG. 4 is a schematic plan view of the stator iron core 50 viewed in the axial direction. The stator iron core 50 includes a cylindrical yoke 51 and the nine teeth 52 (52U1 to 52U3, 52V1 to 52V3, and 52W1 to 52W3) described above. Each of the teeth 52 protrudes from the inner circumferential surface of the yoke 51 toward the rotation axis AX, and is aligned at regular intervals in the circumferential direction around the rotation axis AX.

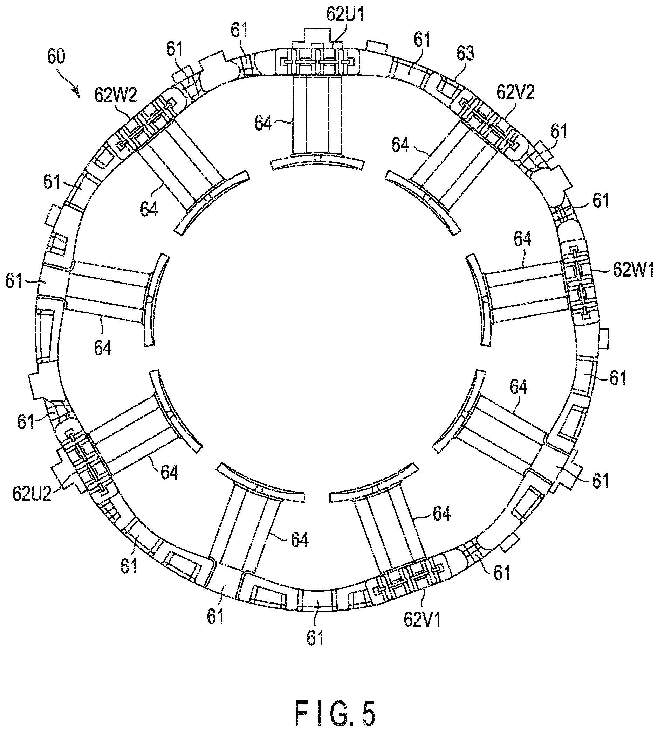

FIG. 5 is a schematic plan view of the first insulating member 60 viewed in the axial direction. The first insulating member 60 includes an annular base 63 and nine protruding portions 64. Each of the protruding portions 64 protrudes from the inner circumferential surface of the base 63 toward the rotation axis AX, and is aligned at the same intervals as the teeth 52 in the circumferential direction around the rotation axis AX. The plurality of recesses 61 and the plurality of housing sections 62 described above are provided on the base 63.

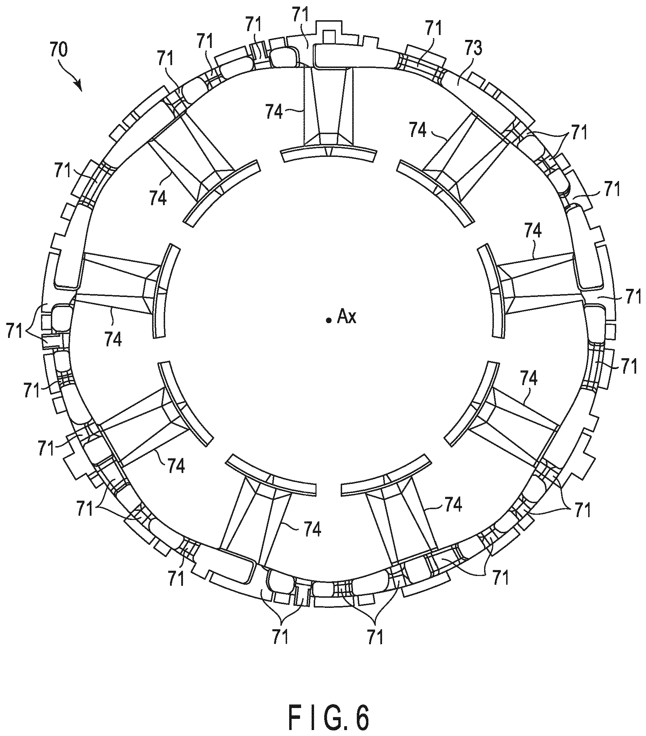

FIG. 6 is a schematic plan view of the second insulating member 70 viewed in the axial direction. The second insulating member 70 includes an annular base 73 and nine protruding portions 74. Each of the protruding portions 74 protrudes from the inner circumferential surface of the base 73 toward the rotation axis AX, and is aligned at the same intervals as the teeth 52 in the circumferential direction around the rotation axis AX. The plurality of recesses 71 described above are provided on the base 73.

The teeth 52 of the stator iron core 50 are sandwiched between the protruding portion 64 of the first insulating member 60 and the protruding portion 74 of the second insulating member 70. The winding 9 is wound around the teeth 52 and the protruding portions 64 and 74 sandwiching the teeth 52.

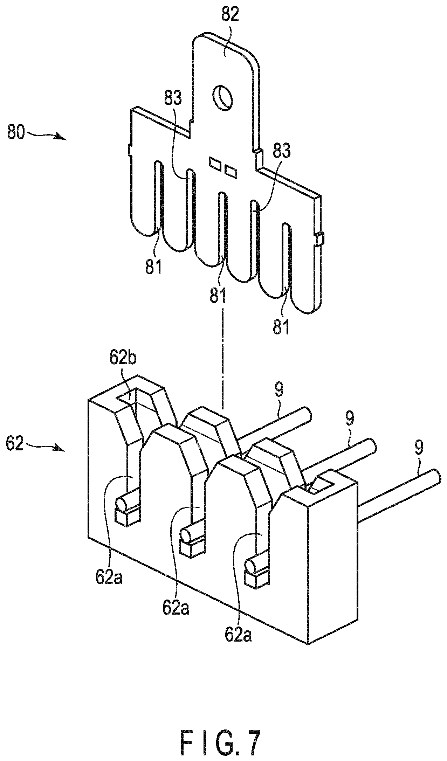

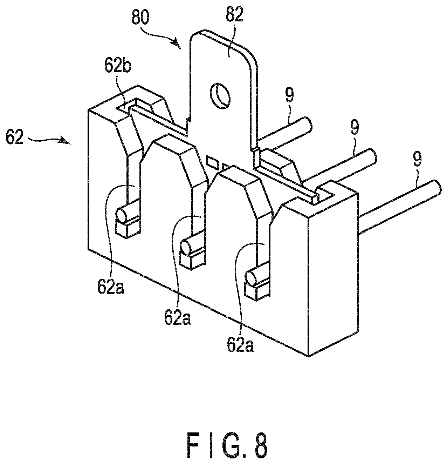

FIG. 7 and FIG. 8 show schematic perspective views of the housing section 62 and the crimp terminal 80. The housing section 62 includes three slits 62a lined up at regular intervals and a slit 62b that crosses these slits 62a. The slit 62b is formed deeper than each slit 62a. The winding 9 can be inserted into the slit 62a, and the crimp terminal 80 can be inserted into the slit 62b.

As shown in FIG. 7, the crimp terminal 80 includes three slits 81 lined up at the same intervals as the slits 62a, and a tab 82. In the example of FIG. 7, a slit 83, which is wider than the slit 81, is provided between the adjacent slits 81. The lead wire 90 is connected to the tab 82.

In a state where the winding 9 is inserted into each slit 62a of the housing section 62 as shown in FIG. 7, when the crimp terminal 80 is pushed into the slit 62b as shown in FIG. 8, the three windings 9 are respectively placed into the slits 81 of the crimp terminal 80. At this time, the film of each winding 9 is broken by both edges of each slit 81. This causes the conductors inside each winding 9 to conduct with the crimp terminal 80. The configurations of the housing section 62 and the crimp terminal 80 are not limited to those illustrated here, as long as the three windings 9 can be made to conduct each other.

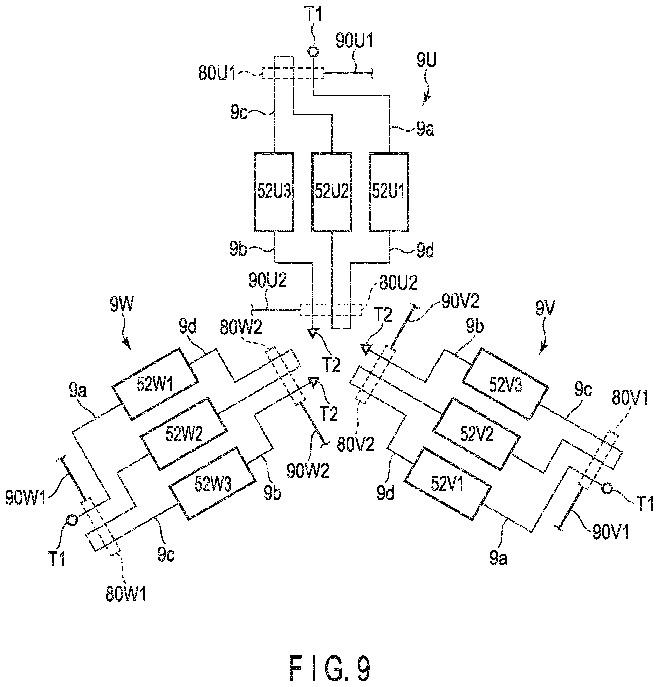

FIG. 9 shows a circuit configured by the windings 9U, 9V, and 9W in the compressor 2 according to the present embodiment. The winding 9U includes a first terminal wire 9a, a second terminal wire 9b, a first intermediate wire 9c, and a second intermediate wire 9d.

The winding 9U is wound in the order of a first tooth 52U1, a second tooth 52U2, and a third tooth 52U3. The first terminal wire 9a corresponds to the portion between a terminal T1 and the tooth 52U1 at the beginning of winding. The second terminal wire 9b corresponds to the portion between a terminal T2 and the tooth 52U3 at the end of the winding. The first intermediate wire 9c corresponds to the portion that connects the teeth 52U2 and 52U3. The second intermediate wire 9d corresponds to the portion that connects the teeth 52U1 and 52U2.

The crimp terminal 80U1 (first crimp terminal) connects the first terminal wire 9a to two points of the first intermediate wire 9c. The crimp terminal 80U2 (second crimp terminal) connects the second terminal wire 9b to two points of the second intermediate wire 9d. The lead wire 90U1 (first lead wire) extending from the crimp terminal 80U1 is connected to the first inverter INV1 via the first terminal 11a as described above. The lead wire 90U2 (second lead wire) extending from the crimp terminal 80U2 is connected to the second inverter INV2 via the second terminal 11b as described above. In such a circuit, the teeth 52U1 to 52U3 are in a parallel relationship.

Similar to the winding 9U, the windings 9V and 9W include a first terminal wire 9a, a second terminal wire 9b, a first intermediate wire 9c, and a second intermediate wire 9d. The connection relationship between each of the lines 9a to 9d included in the winding 9V and the crimp terminals 80V1 and 80V2, and the connection relationship between each of the lines 9a to 9d included in the winding 9W and the crimp terminals 80W1 and 80W2 are the same as that for the winding 9U.

Thus, in the present embodiment, an independent open winding type circuit is configured, in which the windings 9U, 9V, and 9W do not form a neutral point.

The manufacturing method of the electric motor 13 or the compressor 2 will now be described, with particular attention to the routing of the windings 9U, 9V, and 9W in the stator 40.

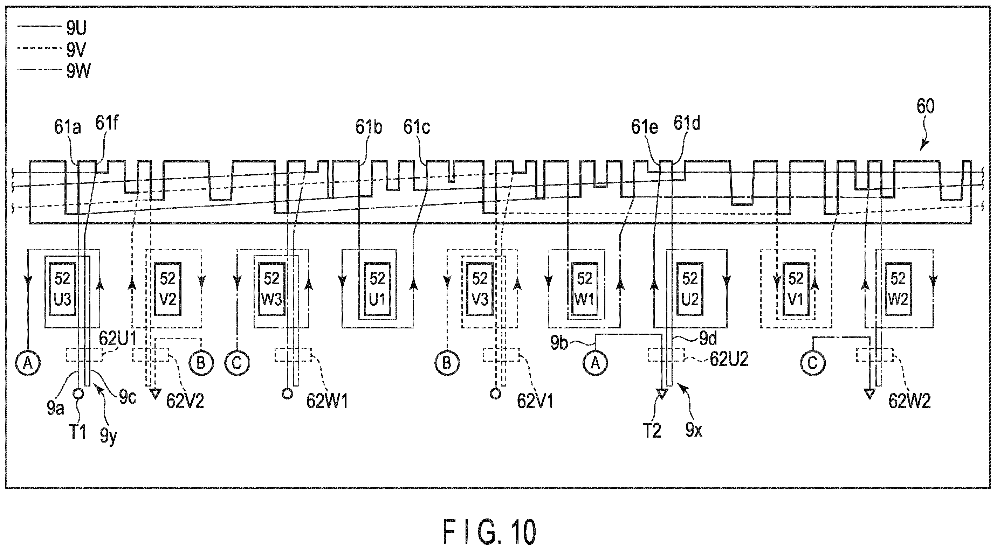

FIG. 10 shows the wiring of the windings 9U, 9V, and 9W with respect to the first insulating member 60 and the teeth 52U1 to 52U3, 52V1 to 52V3, and 52W1 to 52W3. In this drawing, the annular first insulating member 60 and each of the annularly arranged teeth 52 are developed in a plane, and the path of the winding 9U, the path of the winding 9V, and the path of the winding 9W, which are routed to the recesses 61 of the first insulating member 60 and each of the teeth 52, are shown by solid, dashed, and dotted lines, respectively. The windings 9U, 9V, and 9W are also routed to the recesses 71 of the second insulating member 70, but are not shown here. The two signs A, two signs B, and two signs C in the drawing are given to omit a part of the windings 9U, 9V, and 9W, respectively, and do not mean that the windings 9U, 9V, and 9W are interrupted at these positions.

The way the windings 9U, 9V, and 9W are wound on the three teeth 52 of each phase, and the connection points by the crimp terminals 80 are the same. Therefore, the winding 9U will be taken as an example to describe a specific wiring method below.

The first terminal wire 9a of the winding 9U is passed between the teeth 52U3 and 52V2, and is bridged between a recess 61a near the tooth 52U3 and a recess 61b near the tooth 52U1. The winding 9U is then wound around the tooth 52U1 (first tooth).

The winding 9U is then bridged between a recess 61c near the tooth 52U1 and a recess 61d near the tooth 52U2. Then, the winding 9U is bent 180 degrees between the teeth 52U2 and 52W1 to form a first folded portion 9x. After the first folded portion 9x is formed, the winding 9U is wound around the tooth 52U2 (second tooth). The first folded portion 9x is a part of the second intermediate wire 9d described above.

The winding 9U is then bridged between a recess 61e near the tooth 52U2 and a recess 61f near the tooth 52U3. Then, the winding 9U is bent 180 degrees between the teeth 52U3 and 52V2 to form a second folded portion 9y. After the second folded portion 9y is formed, the winding 9U is wound around the tooth 52U3 (third tooth). The second folded portion 9y is a part of the first intermediate wire 9c described above.

When wiring in the above procedure, the first terminal wire 9a and two points of the first intermediate wire 9c in the second folded portion 9y are respectively accommodated in the three slits 62a (see FIG. 7) included in the housing section 62U1 (first housing section) near the tooth 52U3. The second terminal wire 9b and two points of the second intermediate wire 9d in the first folded portion 9x are respectively accommodated in the three slits 62a included in the housing section 62U2 (second housing section) near the tooth 52U2.

By inserting the above-mentioned crimp terminal 80U1 into the housing section 62U1, the first terminal wire 9a and the two points of the first intermediate wire 9c in the second folded portion 9y are electrically connected. By inserting the above-mentioned crimp terminal 80U2 into the housing section 62U2, the second terminal wire 9b and the two points of the second intermediate wire 9d in the first folded portion 9x are electrically connected. As a result, the circuit of the U phase shown in FIG. 9 is configured.

The windings 9V and 9W are also routed in the same procedure as the winding 9U, and predetermined points are electrically connected by the crimp terminals 80V1, 80V2, 80W1, and 80W2. As a result, the circuits of the V phase and the W phase shown in FIG. 9 are configured.

In the example of FIG. 10, the U-shaped portion of the first folded portion 9x extending from the housing section 62U2 and the U-shaped portion of the second folded portion 9y extending from the housing section 62U1 may be cut off. Even in this case, since the two points of the first folded portion 9x are connected via the crimp terminal 80U2 and the two points of the second folded portion 9y are connected via the crimp terminal 80U1, it can be regarded that one continuous winding is configured by each part of the winding 9U shown in FIG. 10. The same applies to windings 9V and 9W.

By attaching the rotor 30 to the stator 40 manufactured in this manner, the electric motor 13 is manufactured. Furthermore, the compressor 2 is manufactured through processes such as mounting the compression mechanism section 12 and the electric motor 13 inside the case 10, connecting the first lead wire assembly 41 and the second lead wire assembly 42 to the first terminal 11a and the second terminal 11b of the cover 11, respectively, and closing the cover 11 with respect to the case 10.

According to the present embodiment described above, a circuit for each phase is formed by connecting a plurality of windings 9 of each phase with two crimp terminals 80. With such a configuration, the number of connection points in the circuit of each phase can be extremely reduced. As a result, the time and effort, the number of parts, and the cost required to manufacture the electric motor 13 and compressor 2 can be greatly reduced.

In addition, with the configuration of the present embodiment, the open winding type circuit shown in FIG. 9 can be easily configured by connecting the lead wires 90 connected to the two crimp terminals 80 of each phase to the first inverter INV1 and the second inverter INV2, respectively.

In addition, by devising the arrangement position of each housing section 62 and the routing of the lead wires 90 in the manner shown in FIG. 3, the winding 9 and lead wires 90 of each phase can be made as short as possible, thereby reducing the amount of winding 9, lead wires 90, or insulating material used to cover them.

Furthermore, by devising the positional relationship between each of the bending points P1 and P2 and each of the terminals 11a and 11b as described above with reference to FIG. 3, the work of connecting each lead wire 90 to each of the terminals 11a and 11b and the work of closing the cover 11 can be made more efficient.

In addition, various other suitable effects can be obtained from the present embodiment.

### [Second Embodiment]

The second embodiment is described below. The present embodiment discloses a method and structure for realizing a star-connection type (Y-connection type) circuit in the electric motor 13 disclosed in the first embodiment. Matters not specifically mentioned are the same as in the first embodiment.

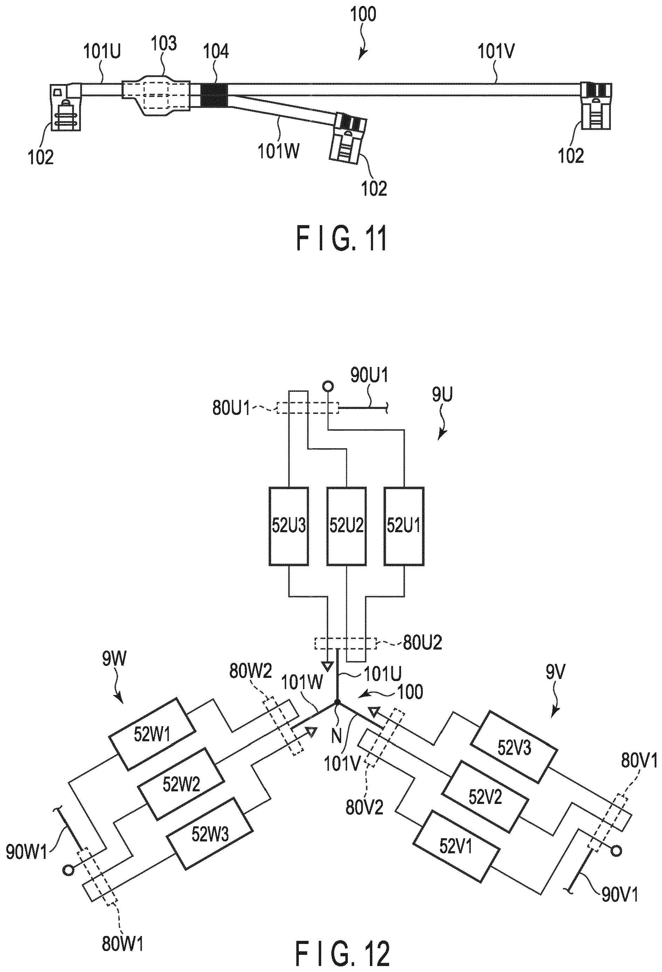

In realizing the star-connection type circuit, a neutral wire for forming a neutral point may be used instead of the lead wires 90U2, 90V2, and 90W2. FIG. 11 shows an example of the neutral wire. This neutral wire 100 comprises three lead wires 101U, 101V, and 101W. A terminal 102 for connecting to a tab 82 of a crimp terminal 80 is provided at one end of the lead wires 101U, 101V, and 101W, respectively. The other ends of the lead wires 101U, 101V, and 101W are connected to each other at a connection portion 103. In the example of FIG. 11, a part of the lead wires 101V and 101W is bundled by a coupling member 104.

The length of the lead wires 101U, 101V, and 101W is, for example, the same as the length of the lead wires 90U2, 90V2, and 90W2 shown in FIG. 3 up to the second bending point P2. That is, the lead wire 101U is the shortest, the lead wire 101V is the longest, and the lead wire 101W has an intermediate length between the lead wires 101U and 101V.

FIG. 12 shows an example of a circuit that can be configured using the neutral wire 100. The routing of windings 9U, 9V, and 9W and the connection points by crimp terminals 80U1, 80U2, 80V1, 80V2, 80W1, and 80W2 are the same as in the first embodiment.

In the example of FIG. 12, the lead wire 101U is connected to the crimp terminal 80U2, the lead wire 101V is connected to the crimp terminal 80V2, and the lead wire 101W is connected to the crimp terminal 80W2. In this manner, a star-connection type circuit with a neutral point N can be obtained.

With the configuration of the electric motor 13 described using FIG. 1 to FIG. 8 and FIG. 10, an open winding type circuit can be realized using the lead wires 90U2, 90V2, and 90W2 as shown in FIG. 9, and a star-connection type circuit can be realized using the neutral wire 100 as shown in FIG. 12.

In the case of using the electric motor 13 including the star-connection type circuit in a compressor 2, the second terminal 11b and the second inverter INV2 shown in FIG. 1 may be omitted.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the invention, which is defined by the appended claims.

### Reference Signs List

1...Air conditioner, 2...Compressor, 9...Winding, 9a...First terminal wire, 9b...Second terminal wire, 9c...First intermediate wire, 9d...Second intermediate wire, 9x...First folded portion, 9y...Second folded portion, 13...Electric motor, 30...Rotor, 40...Stator, 41...First lead wire assembly, 42...Second lead wire assembly, 50...Stator iron core, 51...Yoke, 52...Teeth, 60...First insulating member, 61...Recess, 62...Housing section, 70...Second insulating member, 80...Pressure contact terminal, 90...Lead wire, and 100...Neutral wire.

## Claims

1. An electric motor (13) comprising:
a cylindrical stator (40) and a rotor (30) disposed inside the stator (40), wherein
the stator (40) comprises an iron core (50) including a cylindrical yoke (51) and nine teeth (52) protruding inwardly of the yoke (51), an insulating member (60) provided at an end portion of the iron core (50) in an axial direction, three independent windings (9U, 9V, 9W) respectively wound continuously on three different teeth of the nine teeth (52), three first crimp terminals (80U1, 80V1, 80W1) provided respectively to the three windings (9U, 9V, 9W), and three second crimp terminals (80U2, 80V2, 80W2) provided respectively to the three windings (9U, 9V, 9W),
each of the three windings (9U, 9V, 9W) includes a first terminal wire (9a), a second terminal wire (9b), a first intermediate wire (9c) between two teeth of the nine teeth (52) close to the second terminal wire (9b), and a second intermediate wire (9d) between two teeth of the nine teeth (52) close to the first terminal wire (9a),
wherein each of the three windings (9U, 9V, 9W) is wound in the order of a first tooth (52U1, 52V1, 52W1), a second tooth (52U2, 52V2, 52W2) and a third tooth (52U3, 52V3, 52W3),
the first terminal wire (9a) corresponds to a portion between a terminal (T1) and the first tooth (52U1, 52V1, 52W1) at a beginning of winding,
the second terminal wire (9b) corresponds to a portion between a terminal (T2) and the third tooth (52U3, 52V3, 52W3) at an end of winding,
the first intermediate wire (9c) corresponds to a portion that connects the second tooth (52U2, 52V2, 52W2) and the third tooth (52U3, 52V3, 52W3),
the second intermediate wire (9d) corresponds to a portion that connects the first tooth (52U1, 52V1, 52W1) and the second tooth (52U2, 52V2, 52W2),
the first crimp terminals (80U1, 80V1, 80W1) connect the first terminal wire (9a) of the corresponding winding to two points of the first intermediate wire (9c) of the winding, and
the second crimp terminals (80U1, 80V1, 80W1) connect the second terminal wire (9b) of the corresponding winding to two points of the second intermediate wire (9d) of the winding.

2. The electric motor (13) of claim 1, wherein
the insulating member (60) includes three first housing sections (62U1, 62V1, 62W1) provided for each of the three windings (9U, 9V, 9W) and three second housing sections (62U2, 62V2, 62W2) provided for each of the three windings (9U, 9V, 9W),
each of the first housing sections (62U1, 62V1, 62W1) accommodates the first terminal wire (9a) of the corresponding winding and the two points of the first intermediate wire (9c) of the winding,
each of the second housing sections (62U2, 62V2, 62W2) accommodates the second terminal wire (9b) of the corresponding winding and the two points of the second intermediate wire (9d) of the winding,
each of the first crimp terminals (80U1, 80V1, 80W1) connects the first terminal wire (9a) and the two points of the first intermediate wire (9c) accommodated in the first housing section (62U1, 62V1, 62W1), and
each of the second crimp terminals (80U2, 80V2, 80W2) connects the second terminal wire (9b) and the two points of the second intermediate wire (9d) accommodated in the second housing section (62U2, 62V2, 62W2).

3. The electric motor (13) of claim 2, wherein
each of the first housing sections (62U1, 62V1, 62W1) are provided on an outer side of a radial direction around a rotation axis (AX) of the rotor (30) with respect to the teeth (52) on which a portion between the second terminal wire (b) and the first intermediate wire (9c) of the corresponding winding is wound, and
the second housing sections (62U2, 62V2, 62W2) are provided on an outer side of the radial direction with respect to the teeth (52) on which a portion between the first intermediate wire (9c) and the second intermediate wire (9d) of the corresponding winding is wound.

4. The electric motor (13) of claim 1 further comprising:
three first lead wires (90U1, 90V1, 90W1) respectively connected to the three first crimp terminals (80U1, 80V1, 80W1), and three second lead wires (90U2, 90V2, 90W2) respectively connected to the three second crimp terminals (80U2, 80V2, 80W2), wherein
the electric motor (13) has an open winding type circuit configuration in which three circuits respectively including the three windings (9U, 9V, 9W) are independent of each other.

5. The electric motor (13) of claim 1 further comprising:
three first lead wires (90U1, 90V1, 90W1) connected to the three first crimp terminals (80U1, 80V1, 80W1) and three second lead wires (90U2, 90V2, 90W2) respectively connected to the three second crimp terminals (80U2, 80V2, 80W2), wherein
the three second lead wires (90U2, 90V2, 90W2) are connected to each other at a neutral point.

6. A compressor (2) comprising the electric motor (13) of claim 1, and a compression mechanism section (12) driven by the electric motor (13).

7. The compressor (2) of claim 6 further comprising:
a case (10) accommodating the electric motor (13) and the compression mechanism section (12) and having an opening on the insulating member (60) side, a cover (11) sealing the opening, three first lead wires (90U1, 90V1, 90W1) connected to the three first crimp terminals (80U1, 80V1, 80W1), and three second lead wires (90U2, 90V2, 90W2) respectively connected to the three second crimp terminals (80U2, 80V2, 80W2), wherein
the cover (11) includes a first terminal (11a) to which the three first lead wires (90U1, 90V1, 90W1) are connected and a second terminal (11b) to which the three second lead wires (90U2, 90V2, 90W2) are connected,
the three first lead wires (90U1, 90V1, 90W1) are bundled together and include a first bending point (P1) that rises toward the cover,
the three second lead wires (90U2, 90V2, 90W2) are bundled together and include a second bending point (P2) that rises toward the cover (11), and
when the electric motor (13) is viewed in an axial direction parallel to a rotation axis (AX), one of two regions separated by a straight line (D) passing through the rotation axis (AX) includes the first and second bending points (P1, P2), and the other region includes the first and second terminals (11a, 11b).

8. A refrigeration cycle device (1) comprising the compressor (2) of claim 6, a heat sink (6) connected to the compressor (2), an expansion device (8) connected to the heat sink (6), and a heat absorber (7) connected between the expansion device (8) and the compressor (2).

9. A manufacturing method of an electric motor (13), the electric motor (13) comprising:
a cylindrical stator (40) and a rotor (30) disposed inside the stator (40), wherein
the stator (40) comprises an iron core (50) including a cylindrical yoke (51) and nine teeth (52) protruding inwardly of the yoke (51), an insulating member (60) provided at an end portion of the iron core (50) in an axial direction, three independent windings (9U, 9V, 9W) respectively wound continuously on three different teeth of the nine teeth (52), three first crimp terminals (80U1, 80V1, 80W1) provided respectively to the three windings (9U, 9V, 9W), and three second crimp terminals (80U2, 80V2, 80W2) provided respectively to the three windings (9U, 9V, 9W),
with following steps
winding the three windings (9U, 9V, 9W) respectively onto the different three teeth of the nine teeth (52) in order, each of the different three teeth including a first tooth (52U1, 52V1, 52W1), a second tooth (52U2, 52V2, 52W2) and a third tooth (52U3, 52V3, 52W3) ;
connecting, in each of the three windings (9U, 9V, 9W), a first terminal wire (9a) to two points of a first intermediate wire (9c) by a first crimp terminal (80U1, 80V1, 80W1), the first terminal wire (9a) corresponds to a portion between a terminal (T1) and the first tooth (52U1, 52V1, 52W1) at a beginning of winding, the first intermediate wire (9c) corresponds to a portion that connects the second tooth (52U2, 52V2, 52W2) and the third tooth (52U3, 52V3, 52W3); and
connecting, in each of the three windings (9U, 9V, 9W), a second terminal wire (9b) to two points of a second intermediate wire (9d) by a second crimp terminal (80U2, 80V2, 80W2), the second terminal wire (9b) corresponds to a portion between a terminal (T2) and the third tooth (52U3, 52V3, 52W3) at an end of winding, the second intermediate wire corresponds to a portion that connects the first tooth (52U1, 52V1, 52W1) and the second tooth (52U2, 52V2, 52W2).

10. The manufacturing method of claim 9, wherein
when winding the winding (9U, 9V, 9W) onto the three teeth, after winding the winding (9U, 9V, 9W) onto the first tooth (52U1, 52V1, 52W1), before winding the winding (9U, 9V, 9W) onto the second tooth (52U2, 52V2, 52W2), the winding (9U, 9V, 9W) is bent to form a first folded portion (9x), and after winding the winding (9U, 9V, 9W) onto the second tooth (52U2, 52V2, 52W2), before winding the winding (9U, 9V, 9W) onto a third tooth (52U3, 52V3, 52W3), the winding (9U, 9V, 9W) is bent to form a second folded portion (9y), and the winding (9U, 9V, 9W) is subsequently wound onto the third tooth (52U3, 52V3, 52W3),
the first terminal wire (9a) and two points of the second folded portion (9y) are connected by the first crimp terminal (80U1, 80V1, 80W1), and
the second terminal wire (9b) and two points of the first folded portion (9x) are connected by the second crimp terminal (80U2, 80V2, 80W2).

## Patentansprüche

1. Elektromotor (13) mit:
einem zylindrischen Stator (40) und einem innerhalb des Stators (40) angeordneten Rotor (30), wobei
der Stator (40) einen Eisenkern (50) mit einem zylindrischen Joch (51) und neun Zähnen (52) umfasst, die nach innen aus dem Joch (51) herausragen, ein Isolierelement (60), das in axialer Richtung an einem Endabschnitt des Eisenkerns (50) vorgesehen ist, drei unabhängige Wicklungen (9U, 9V, 9W), die jeweils kontinuierlich auf drei verschiedenen Zähnen der neun Zähne (52) gewickelt sind, drei erste Crimpanschlüsse (80U1, 80V1, 80W1), die jeweils an den drei Wicklungen (9U, 9V, 9W) vorgesehen sind, und drei zweite Crimpanschlüsse (80U2, 80V2, 80W2), die jeweils an den drei Wicklungen (9U, 9V, 9W) vorgesehen sind, wobei
jede der drei Wicklungen (9U, 9V, 9W) einen ersten Anschlussdraht (9a), einen zweiten Anschlussdraht (9b), einen ersten Zwischendraht (9c) zwischen zwei Zähnen der neun Zähne (52) in der Nähe des zweiten Anschlussdrahtes (9b) und einen zweiten Zwischendraht (9d) zwischen zwei Zähnen der neun Zähne (52) in der Nähe des ersten Anschlussdrahtes (9a) aufweist,
wobei
jede der drei Wicklungen (9U, 9V, 9W) in der Reihenfolge eines ersten Zahns (52U1, 52V1, 52W1), eines zweiten Zahns (52U2, 52V2, 52W2) und eines dritten Zahns (52U3, 52V3, 52W3) gewickelt ist,
der erste Anschlussdraht (9a) entspricht einem Abschnitt zwischen einem Anschluss (T1) und dem ersten Zahn (52U1, 52V1, 52W1) am Anfang der Wicklung,
der zweite Anschlussdraht (9b) entspricht einem Abschnitt zwischen einem Anschluss (T2) und dem dritten Zahn (52U3, 52V3, 52W3) am Ende der Wicklung,
der erste Zwischendraht (9c) entspricht einem Abschnitt, der den zweiten Zahn (52U2, 52V2, 52W2) und den dritten Zahn (52U3, 52V3, 52W3) verbindet,
der zweite Zwischendraht (9d) entspricht einem Abschnitt, der den ersten Zahn (52U1, 52V1, 52W1) und den zweiten Zahn (52U2, 52V2, 52W2) verbindet,
die ersten Crimpanschlüsse (80U1, 80V1, 80W1) verbinden den ersten Anschlussdraht (9a) der entsprechenden Wicklung mit zwei Punkten des ersten Zwischendrahtes (9c) der Wicklung, und
die zweiten Crimpanschlüsse (80U1, 80V1, 80W1) verbinden den zweiten Anschlussdraht (9b) der entsprechenden Wicklung mit zwei Punkten des zweiten Zwischendrahtes (9d) der Wicklung.

2. Elektromotor (13) nach Anspruch 1, wobei
das Isolierelement (60) drei erste Gehäuseabschnitte (62U1, 62V1, 62W1) umfasst, die für jede der drei Wicklungen (9U, 9V, 9W) vorgesehen sind, sowie drei zweite Gehäuseabschnitte (62U2, 62V2, 62W2) für jede der drei Wicklungen (9U, 9V, 9W) umfasst, wobei
jeder der ersten Gehäuseabschnitte (62U1, 62V1, 62W1) den ersten Anschlussdraht (9a) der entsprechenden Wicklung und die beiden Punkte des ersten Zwischendrahtes (9c) der Wicklung aufnimmt,
jeder der zweiten Gehäuseabschnitte (62U2, 62V2, 62W2) nimmt den zweiten Anschlussdraht (9b) der entsprechenden Wicklung und die beiden Punkte des zweiten Zwischendrahtes (9d) der Wicklung auf,
jeder der ersten Crimpanschlüsse (80U1, 80V1, 80W1) verbindet den ersten Anschlussdraht (9a) und die beiden Punkte des ersten Zwischendrahtes (9c), die im ersten Gehäuseabschnitt (62U1, 62V1, 62W1) aufgenommen sind, und
jeder der zweiten Crimpanschlüsse (80U2, 80V2, 80W2) verbindet den zweiten Anschlussdraht (9b) und die beiden Punkte des zweiten Zwischendrahtes (9d), die im zweiten Gehäuseabschnitt (62U2, 62V2, 62W2) untergebracht sind.

3. Elektromotor (13) nach Anspruch 2, wobei
jeder der ersten Gehäuseabschnitte (62U1, 62V1, 62W1) an einer Außenseite einer radialen Richtung um eine Drehachse (AX) des Rotors (30) in Bezug auf die Zähne (52) ausgebildet ist, auf denen ein Abschnitt zwischen dem zweiten Anschlussdraht (b) und dem ersten Zwischendraht (9c) der entsprechenden Wicklung gewickelt ist, und
die zweiten Gehäuseabschnitte (62U2, 62V2, 62W2) an einer Außenseite der radialen Richtung in Bezug auf die Zähne (52) vorgesehen sind, auf denen ein Abschnitt zwischen dem ersten Zwischendraht (9c) und dem zweiten Zwischendraht (9d) der entsprechenden Wicklung gewickelt ist.

4. Elektromotor (13) nach Anspruch 1, der ferner umfassend:
drei erste Anschlussdrähte (90U1, 90V1, 90W1), die jeweils mit den drei ersten Crimpanschlüssen (80U1, 80V1, 80W1) verbunden sind, und drei zweite Anschlussdrähte (90U2, 90V2, 90W2), die jeweils mit den drei zweiten Crimpanschlüssen (80U2, 80V2, 80W2) verbunden sind, wobei
der Elektromotor (13) eine offene Wicklungsschaltungskonfiguration aufweist, bei der drei Schaltungen, die jeweils die drei Wicklungen (9U, 9V, 9W) umfassen, voneinander unabhängig sind.

5. Elektromotor (13) nach Anspruch 1, der ferner umfassend:
drei erste Anschlussdrähte (90U1, 90V1, 90W1), die mit den drei ersten Crimpanschlüssen (80U1, 80V1, 80W1) verbunden sind, und drei zweite Anschlussdrähte (90U2, 90V2, 90W2), die jeweils mit den drei zweiten Crimpanschlüssen (80U2, 80V2, 80W2) verbunden sind, wobei
die drei zweiten Anschlussdrähte (90U2, 90V2, 90W2) an einem Neutralpunkt miteinander verbunden sind.

6. Kompressor (2) mit dem Elektromotor (13) nach Anspruch 1 und einem vom Elektromotor (13) angetriebenen Kompressionsmechanismus-Abschnitt (12).

7. Kompressor (2) nach Anspruch 6, der ferner umfassend:
ein Gehäuse (10), das den Elektromotor (13) und den Kompressionsmechanismus-Abschnitt (12) aufnimmt und eine Öffnung auf der Seite des Isolierelements (60) aufweist, eine Abdeckung (11), welche die Öffnung abdichtet, drei erste Anschlussdrähte (90U1, 90V1, 90W1), die mit den drei ersten Crimpanschlüssen (80U1, 80V1, 80W1) verbunden sind, und drei zweite Anschlussdrähte (90U2, 90V2, 90W2), die jeweils mit den drei zweiten Crimpanschlüssen (80U2, 80V2, 80W2) verbunden sind, wobei
die Abdeckung (11) einen ersten Anschluss (11a), mit dem die drei ersten Anschlussdrähte (90U1, 90V1, 90W1) verbunden sind, und einen zweiten Anschluss (11b), mit dem die drei zweiten Anschlussdrähte (90U2, 90V2, 90W2) verbunden sind, umfasst,
die drei ersten Anschlussdrähte (9001, 90V1, 90W1) gebündelt sind und einen ersten Biegepunkt (P1) aufweisen, der zur Abdeckung hin ansteigt,
die drei zweiten Anschlussdrähte (90U2, 90V2, 90W2) gebündelt sind und einen zweiten Biegepunkt (P2) aufweisen, der zur Abdeckung (11) hin ansteigt, und
wenn der Elektromotor (13) in einer axialen Richtung parallel zu einer Drehachse (AX) betrachtet wird, umfasst einer von zwei Bereichen, die durch eine gerade Linie (D) getrennt sind, die durch die Drehachse (AX) verläuft, den ersten und den zweiten Biegepunkt (P1, P2), und der andere Bereich umfasst den ersten und den zweiten Anschluss (11a, 11b).

8. Kältekreislaufvorrichtung (1), die den Kompressor (2) nach Anspruch 6, einen mit dem Kompressor (2) verbundenen Kühlkörper (6), eine mit dem Kühlkörper (6) verbundene Expansionsvorrichtung (8) und einen zwischen der Expansionsvorrichtung (8) und dem Kompressor (2) verbundenen Wärmeabsorber (7) umfasst.

9. Verfahren zur Herstellung eines Elektromotors (13), wobei der Elektromotor (13) umfassend:
einen zylindrischen Stator (40) und einen Rotor (30), der innerhalb des Stators (40) angeordnet ist, wobei
der Stator (40) einen Eisenkern (50) mit einem zylindrischen Joch (51) und neun Zähnen (52), die nach innen aus dem Joch (51) herausragen, ein Isolierelement (60), das an einem Endabschnitt des Eisenkerns (50) in axialer Richtung vorgesehen ist, drei unabhängige Wicklungen (9U, 9V, 9W), die jeweils kontinuierlich auf drei verschiedene Zähnen der neun Zähne (52) gewickelt sind, drei erste Crimpanschlüsse (80U1, 80V1, 80W1), die jeweils an den drei Wicklungen (9U, 9V, 9W) vorgesehen sind, und drei zweite Crimpanschlüsse (80U2, 80V2, 80W2), die jeweils für die drei Wicklungen (9U, 9V, 9W) vorgesehen sind,
mit den folgenden Schritten
Wickeln der drei Wicklungen (9U, 9V, 9W) jeweils auf die drei verschiedenen Zähne der neun Zähne (52) in Reihenfolge, wobei jeder der drei verschiedenen Zähne einen ersten Zahn (52U1, 52V1, 52W1), einen zweiten Zahn (52U2, 52V2, 52W2) und einen dritten Zahn (52U3, 52V3, 52W3) umfasst;
Verbinden eines ersten Anschlussdrahtes (9a) mit zwei Punkten eines ersten Zwischendrahtes (9c) in jeder der drei Wicklungen (9U, 9V, 9W) durch eine erste Crimpverbindung (80U1, 80V1, 80W1), der erste Anschlussdraht (9a) entspricht einem Abschnitt zwischen einem Anschluss (T1) und dem ersten Zahn (52U1, 52V1, 52W1) am Anfang der Wicklung, der erste Zwischenleiter (9c) entspricht einem Abschnitt, der den zweiten Zahn (52U2, 52V2, 52W2) und den dritten Zahn (52U3, 52V3, 52W3) verbindet; und
in jeder der drei Wicklungen (9U, 9V, 9W) Verbinden eines zweiten Anschlussdrahts (9b) mit zwei Punkten eines zweiten Zwischendrahtes (9d) durch einen zweiten Crimpanschluss (80U2, 80V2, 80W2), der zweite Anschlussdraht (9b) entspricht einem Abschnitt zwischen einem Anschluss (T2) und dem dritten Zahn (52U3, 52V3, 52W3) an einem Ende der Wicklung, der zweite Zwischendraht entspricht einem Abschnitt, der den ersten Zahn (52U1, 52V1, 52W1) und den zweiten Zahn (52U2, 52V2, 52W2) verbindet.

10. Verfahren zur Herstellung nach Anspruch 9, wobei
beim Wickeln der Wicklung (9U, 9V, 9W) auf die drei Zähne, nach dem Wickeln der Wicklung (9U, 9V, 9W) auf den ersten Zahn (52U1, 52V1, 52W1), vor dem Wickeln der Wicklung (9U, 9V, 9W) auf den zweiten Zahn (52U2, 52V2, 52W2) gewickelt wird, die Wicklung (9U, 9V, 9W) gebogen wird, um einen ersten gefalteten Abschnitt (9x) zu bilden, und nach dem Wickeln der Wicklung (9U, 9V, 9W) auf den zweiten Zahn (52U2, 52V2, 52W2), vor dem Wickeln der Wicklung (9U, 9V, 9W) auf einen dritten Zahn (52U3, 52V3, 52W3) gewickelt wird, wird die Wicklung (9U, 9V, 9W) gebogen, um einen zweiten gefalteten Abschnitt (9y) zu bilden, und die Wicklung (9U, 9V, 9W) wird anschließend auf den dritten Zahn (52U3, 52V3, 52W3) gewickelt,
der erste Anschlussdraht (9a) und zwei Punkte des zweiten gefalteten Abschnitts (9y) werden durch den ersten Crimpanschluss (80U1, 80V1, 80W1) verbunden, und
der zweite Anschlussdraht (9b) und zwei Punkte des ersten gefalteten Abschnitts (9x) durch den zweiten Crimpanschluss (80U2, 80V2, 80W2) verbunden werden.

## Revendications

1. Moteur électrique (13) comprenant :
un stator cylindrique (40) et un rotor (30) disposé à l'intérieur du stator (40), dans lequel :
le stator (40) comprend un noyau en fer (50) comprenant une culasse cylindrique (51) et neuf dents (52) faisant saillie vers l'intérieur de la culasse (51), un élément isolant (60) prévu au niveau d'une partie d'extrémité du noyau en fer (50) dans une direction axiale, trois enroulements indépendants (9U, 9V, 9W) respectivement enroulés de manière continue sur trois dents différentes des neuf dents (52), trois premières bornes de sertissage (80U1, 80V1, 80W1) prévues respectivement pour les trois enroulements (9U, 9V, 9W), et trois deuxièmes bornes de sertissage (80U2, 80V2, 80W2) prévues respectivement pour les trois enroulements (9U, 9V, 9W),
chacun des trois enroulements (9U, 9V, 9W) comprend un premier fil de borne (9a), un deuxième fil de borne (9b), un premier fil intermédiaire (9c) entre deux dents des neuf dents (52) proches du deuxième fil de borne (9b), et un deuxième fil intermédiaire (9d) entre deux dents des neuf dents (52) proches du premier fil de borne (9a),
dans lequel chacun des trois enroulements (9U, 9V, 9W) est enroulé dans l'ordre d'une première dent (52U1, 52V1, 52W1), d'une deuxième dent (52U2, 52V2, 52W2) et d'une troisième dent (52U3, 52V3, 52W3) ;
le premier fil de borne (9a) correspond à une partie entre une borne (T1) et la première dent (52U1, 52V1, 52W1) au début de l'enroulement,
le deuxième fil de borne (9b) correspond à une partie entre une borne (T2) et la troisième dent (52U3, 52V3, 52W3) à la fin de l'enroulement,
le premier fil intermédiaire (9c) correspond à une partie qui relie la deuxième dent (52U2, 52V2, 52W2) et la troisième dent (52U3, 52V3, 52W3),
le deuxième fil intermédiaire (9d) correspond à une partie qui relie la première dent (52U1, 52V1, 52W1) et la deuxième dent (52U2, 52V2, 52W2);
les premières bornes de sertissage (80U1, 80V1, 80W1) relient le premier fil de borne (9a) de l'enroulement correspondant à deux points du premier fil intermédiaire (9c) de l'enroulement, et
les deuxièmes bornes de sertissage (80U1, 80V1, 80W1) relient le deuxième fil de borne (9b) de l'enroulement correspondant à deux points du deuxième fil intermédiaire (9d) de l'enroulement.

2. Moteur électrique (13) selon la revendication 1, dans lequel l'élément isolant (60) comprend trois premières sections de logement (62U1, 62V1, 62W1) prévues pour chacun des trois enroulements (9U, 9V, 9W) et trois deuxièmes sections de logement (62U2, 62V2, 62W2) prévues pour chacun des trois enroulements (9U, 9V, 9W),
chacune des premières sections de logement (62U1, 62V1, 62W1) loge le premier fil de borne (9a) de l'enroulement correspondant et les deux points du premier fil intermédiaire (9c) de l'enroulement,
chacune des deuxièmes sections de logement (62U2, 62V2, 62W2) loge le deuxième fil de borne (9b) de l'enroulement correspondant et les deux points du deuxième fil intermédiaire (9d) de l'enroulement ;
chacune des premières bornes de sertissage (80U1, 80V1, 80W1) relie le premier fil de borne (9a) et les deux points du premier fil intermédiaire (9c) logés dans la première section de logement (62U1, 62V1, 62W1), et
chacune des deuxièmes bornes de sertissage (80U2, 80V2, 80W2) relie le deuxième fil de borne (9b) et les deux points du deuxième fil intermédiaire (9d) logés dans la deuxième section de logement (62U2, 62V2, 62W2).

3. Moteur électrique (13) selon la revendication 2, dans lequel chacune des premières sections de logement (62U1, 62V1, 62W1) est prévue sur un côté extérieur d'une direction radiale autour d'un axe de rotation (AX) du rotor (30) par rapport aux dents (52) sur lesquelles une partie entre le deuxième fil de borne (b) et le premier fil intermédiaire (9c) de l'enroulement correspondant est enroulée, et
les deuxièmes sections de logement (62U2, 62V2, 62W2) sont prévues sur un côté extérieur de la direction radiale par rapport aux dents (52) sur lesquelles une partie entre le premier fil intermédiaire (9c) et le deuxième fil intermédiaire (9d) de l'enroulement correspondant est enroulée.

4. Moteur électrique (13) selon la revendication 1, comprenant en outre :
trois premiers fils de connexion (90U1, 90V1, 90W1) respectivement connectés aux trois premières bornes de sertissage (80U1, 80V1, 80W1), et trois deuxièmes fils de connexion (90U2, 90V2, 90W2) respectivement connectés aux trois deuxièmes bornes de sertissage (80U2, 80V2, 80W2),
dans lequel
le moteur électrique (13) présente une configuration de circuit de type à enroulement ouvert dans laquelle trois circuits comprenant respectivement les trois enroulements (9U, 9V, 9W) sont indépendants les uns des autres.

5. Moteur électrique (13) selon la revendication 1, comprenant en outre :
trois premiers fils de connexion (90U1, 90V1, 90W1) connectés aux trois premières bornes de sertissage (80U1, 80V1, 80W1) et trois deuxièmes fils de connexion (90U2, 90V2, 90W2) respectivement connectés aux trois deuxièmes bornes de sertissage (80U2, 80V2, 80W2), dans lequel :
les trois deuxièmes fils de connexion (90U2, 90V2, 90W2) sont connectés les uns aux autres en un point neutre.

6. Compresseur (2) comprenant le moteur électrique (13) selon la revendication 1, et une section de mécanisme de compression (12) entraînée par le moteur électrique (13).

7. Compresseur (2) selon la revendication 6, comprenant en outre:
un carter (10) logeant le moteur électrique (13) et la section de mécanisme de compression (12) et ayant une ouverture du côté de l'élément isolant (60), un couvercle (11) scellant l'ouverture, trois premiers fils de connexion (90U1, 90V1, 90W1) connectés aux trois premières bornes de sertissage (80U1, 80V1, 80W1), et trois deuxièmes fils de connexion (90U2, 90V2, 90W2) respectivement connectés aux trois deuxièmes bornes de sertissage (80U2, 80V2, 80W2),
dans lequel :
le couvercle (11) comprend une première borne (11a) à laquelle les trois premiers fils de connexion (90U1, 90V1, 90W1) sont connectés et une deuxième borne (11b) à laquelle les trois deuxièmes fils de connexion (90U2, 90V2, 90W2) sont connectés,
les trois premiers fils de connexion (90U1, 90V1, 90W1) sont regroupés et comprennent un premier point de pliage (P1) qui s'élève vers le couvercle,
les trois deuxièmes fils de connexion (90U2, 90V2, 90W2) sont regroupés et comprennent un deuxième point de pliage (P2) qui s'élève vers le couvercle (11), et
lorsque le moteur électrique (13) est observé dans une direction axiale parallèle à un axe de rotation (AX), l'une des deux régions séparées par une ligne droite (D) passant par l'axe de rotation (AX) comprend les premier et deuxième points de pliage (P1, P2), et l'autre région comprend les première et deuxième bornes (11a, 11b).

8. Dispositif de cycle frigorifique (1) comprenant le compresseur (2) selon la revendication 6, un dissipateur de chaleur (6) connecté au compresseur (2), un dispositif de détente (8) connecté au dissipateur de chaleur (6), et un absorbeur de chaleur (7) connecté entre le dispositif de détente (8) et le compresseur (2).

9. Procédé de fabrication d'un moteur électrique (13), le moteur électrique (13) comprenant :
un stator cylindrique (40) et un rotor (30) disposé à l'intérieur du stator (40), dans lequel :
le stator (40) comprend un noyau en fer (50) comprenant une culasse cylindrique (51) et neuf dents (52) faisant saillie vers l'intérieur de la culasse (51), un élément isolant (60) prévu au niveau d'une partie d'extrémité du noyau en fer (50) dans une direction axiale, trois enroulements indépendants (9U, 9V, 9W) respectivement enroulés de manière continue sur trois dents différentes des neuf dents (52), trois premières bornes de sertissage (80U1, 80V1, 80W1) prévues respectivement pour les trois enroulements (9U, 9V, 9W), et trois deuxièmes bornes de sertissage (80U2, 80V2, 80W2) prévues respectivement pour les trois enroulements (9U, 9V, 9W),
avec les étapes suivantes :
enrouler les trois enroulements (9U, 9V, 9W) respectivement sur les trois dents différentes des neuf dents (52) dans l'ordre, chacune des trois dents différentes comprenant une première dent (52U1, 52V1, 52W1), une deuxième dent (52U2, 52V2, 52W2) et une troisième dent (52U3, 52V3, 52W3) ;
connecter, dans chacun des trois enroulements (9U, 9V, 9W), un premier fil de borne (9a) à deux points d'un premier fil intermédiaire (9c) au moyen d'une première borne de sertissage (80U1, 80V1, 80W1), le premier fil de borne (9a) correspond à une partie entre une borne (T1) et la première dent (52U1, 52V1, 52W1) au début de l'enroulement, le premier fil intermédiaire (9c) correspond à une partie qui relie la deuxième dent (52U2, 52V2, 52W2) et la troisième dent (52U3, 52V3, 52W3) ; et
connecter, dans chacun des trois enroulements (9U, 9V, 9W), un deuxième fil de borne (9b) à deux points d'un deuxième fil intermédiaire (9d) au moyen d'une deuxième borne de sertissage (80U2, 80V2, 80W2), le deuxième fil de borne (9b) correspond à une partie entre une borne (T2) et la troisième dent (52U3, 52V3, 52W3) à la fin de l'enroulement, le deuxième fil intermédiaire correspond à une partie qui relie la première dent (52U1, 52V1, 52W1) et la deuxième dent (52U2, 52V2, 52W2).

10. Procédé de fabrication selon la revendication 9, dans lequel lors de l'enroulement de l'enroulement (9U, 9V, 9W) sur les trois dents, après avoir enroulé l'enroulement (9U, 9V, 9W) sur la première dent (52U1, 52V1, 52W1), avant d'enrouler l'enroulement (9U, 9V, 9W) sur la deuxième dent (52U2, 52V2, 52W2), l'enroulement (9U, 9V, 9W) est plié pour former une première partie pliée (9x), et après avoir enroulé l'enroulement (9U, 9V, 9W) sur la deuxième dent (52U2, 52V2, 52W2), avant d'enrouler l'enroulement (9U, 9V, 9W) sur une troisième dent (52U3, 52V3, 52W3), l'enroulement (9U, 9V, 9W) est plié pour former une deuxième partie pliée (9y), et l'enroulement (9U, 9V, 9W) est ensuite enroulé sur la troisième dent (52U3, 52V3, 52W3) ;
le premier fil de borne (9a) et deux points de la deuxième partie pliée (9y) sont connectés par la première borne de sertissage (80U1, 80V1, 80W1), et
le deuxième fil de borne (9b) et deux points de la première partie pliée (9x) sont connectés par la deuxième borne de sertissage (80U2, 80V2, 80W2).
